Europäisches Patentamt

European Patent Office

Office européen des brevets

(11) Veröffentlichungsnummer: **0 283 744 B1**

# EUROPÄISCHE PATENTSCHRIFT

(45) Veröffentlichungstag der Patentschrift: **09.12.92**

(51) Int. Cl.⁵: **A01N 65/00**, C05F 11/00

(21) Anmeldenummer: **88102658.7**

(22) Anmeldetag: **24.02.88**

Die Akte enthält technische Angaben, die nach dem Eingang der Anmeldung eingereicht wurden und die nicht in dieser Patentschrift enthalten sind.

(54) **Bioregulator auf der Basis pflanzlicher Rohstoffe und Verfahren zu seiner Herstellung.**

(30) Priorität: **27.02.87 YU 309/87**

(43) Veröffentlichungstag der Anmeldung:
**28.09.88 Patentblatt 88/39**

(45) Bekanntmachung des Hinweises auf die Patenterteilung:
**09.12.92 Patentblatt 92/50**

(84) Benannte Vertragsstaaten:
**AT BE CH DE ES FR GB GR IT LI LU NL SE**

(56) Entgegenhaltungen:

**CENTRAL PATENTS INDEX, BASIC AB-STRACTS JOURNAL, Section C, Woche Y/18, Nr. 31899 Y/18, 1977, Derwent Publications Ltd, London, GB; & JP-A- 52 038 093 (KYOWA HAKKO KOGYO K.) 24-03-1977**

(73) Patentinhaber: **Dr. Branko Gajic und Partner GmbH Patentverwertungsgesellschaft mbH Westerwaldstrasse 5 W-6148 Heppenheim(DE)**

(72) Erfinder: **Gajic, Branco R., Dipl.-Ing. Bulevar Lenjina 105/7 YU-11070 Novi Beograd(YU)**

(74) Vertreter: **Gudel, Diether, Dr. et al Patentanwälte Dipl.-Ing. G. Dannenberg Dr. P. Weinhold Dr. D. Gudel Dipl.-Ing. S. Schubert Dr. P. Barz Grosse Eschenheimer Strasse 39 W-6000 Frankfurt am Main 1(DE)**

EP 0 283 744 B1

**Beschreibung**

Die Erfindung betrifft einen Bioregulator auf der Basis pflanzlicher Rohstoffe von Pflanzen welche zur Familie der Caryophillaceae gehören sowie ein Verfahren zu seiner Herstellung.

Zum Stimulieren des Pflanzenwachstums und für den Pflanzenschutz sind überwiegend synthetische Mittel im Einsatz. Diese haben aber den gravierenden Nachteil, daß sie die Umwelt belasten. Pflanzenschutzmittel sind sogar für einige Tierarten tödlich. Auch wenn es sich um relativ gefahrlose Mittel handelt, so bringt ihre wiederholte Anwendung doch den Nachteil mit sich, daß die Fruchtbarkeit es entsprechend behandelten Bodens nach und nach abnimmt. Gegebenenfalls sammeln sich mit der Zeit auch schädliche Rückstände im Boden an.

Die Erfindung vermeidet diese Nachteile. Ihr liegt die Aufgabe zugrunde, einen Bioregulator, d.h. ein Pflanzenhilfsmittel, zu schaffen, das einerseits völlig ungiftig und gefahrlos für die Umwelt ist und diese nicht belastet, und das andererseits bei einer universellen Einsetzbarkeit für Pflanzen aller Art deren Wachstum mit breitem Wirkungsspektrum unterstützt.

Der erfindungsgemäße Bioregulator ist zur Lösung dieser Aufgabe gekennzeichnet durch folgende Hauptbestandteile, ggf. mit üblichen Zusätzen, beispielsweise mineralischen Düngemitteln und/oder Pflanzenschutzmitteln,

a.) 20 bis 30 Gew. % Herniaria L.
b.) 8 bis 14 Gew. % Duffonia L.
c.) 10 bis 16 Gew. % Spergula L.
d.) 30 bis 40 Gew. & Ortega L.
e.) 5 bis 7 Gew. % Arenaria L.
f.) 6 bis 8 Gew. % Sagina L.
g.) 4 bis 6 Gew. % Holesteum L. und
h.) 0 bis 10 Gew. % andere pflanzliche Bestandteile.

Versuche haben ergeben, daß sich besonders gute Ergebnisse erzielen lasse, wenn die Hauptbestandteile in etwa folgenden Anteilen vorliegen:

a.) 24,3 Gew. % Herniaria L.
b.) 10,6 Gew. % Duffonia L.
c.) 12,8 Gew. % Spergula L.
d ) 34,7 Gew. % Ortega L.
e.) 5,6 Gew. % Arenaria L.
f.) 6,5 Gew. & Sagina L.
g.) 4,3 Gew. % Holesteum L. und
h.) 1,2 Gew. % andere pflanzliche Bestandteile.

Das Verfahren zur Herstellung eines derartigen Bioregulators ist erfindungsgemäß dadurch gekennzeichnet,daß die Hauptbestandteile in den erwähnten Anteilen einzeln in einer Mühle bis zu Korngrößen mit einem Durchmesser von etwa 0,5 bis 100 $\mu$m, vorzugsweise etwa 1 bis 3 $\mu$m, gemahlen und anschließend miteinande gemischt werden, daß die Mischung anschließend durch Zugabe eines geeigneten Extraktionsmittels, vorzugsweise von n-Butanol, in eine Masse mit plastischer Konsistenz umgewandelt wird, die anschließend getrocknet wird.

Hierbei wird es bevorzugt, wenn das Extraktionsmittel nach und nach über einen Zeitraum von etwa 60 Minuten bei einer Temperatur von etwa 20°C bis 40°C der Mischung unter ständigem Ruhren bei einer Drehzahl von etwa 400 bis 500 Umdrehungen pro Minute zugegeben wird, worauf die Masse mit plastischer Konsistenz bei einer Temperatur von etwa 50°C bis zu einer konstanten Feuchtigkeit getrocknet, gegebenenfalls granuliert und dann abgepackt wird.

Der erfindungsgemäße Bioregulator ist also ein Pflanzenhilfsmittel natürlichen Ursprungs mit einem breiten Wirkungsspektrum. Es beruht im Grunde auf einer wechselseitigen Beeinflussung zwischen Kulturpflanzen und bestimmten Wildkräutern. Das Naturprodukt beeinflußt durch seine bioregulatorische Wirkung die Stoffwechselprozesse - Respiration, Assimilation und Pfotosynthese - während der autotrophen und heterotrophen Phasen des Planzenwachstums. Durch den erfindungsgemäßen Bioregulator wird das Wachstum, der Entwicklungsprozeß und der Ertrag, d.h. im allgemeinen die Anzahl und Größe der Frucht, stimuliert.

Der Bioregulator kann bei der Saatgutbehandlung eingesetzt werden. Dabei werden die Keimreserven besser mobilisiert, wodurch dem Keimling ein kräftigeres und teilweise auch schnelleres Wachstum ermöglicht wird. Mitentscheidend ist die nachfolgende, wesentlich intensivere Ausbildung des Wurzelsystems. Sie bewirkt eine deutlich effektivere Nährstoff- und Wasseraufnahme. Das umfangreichere Wurzelsystem sichert so der Pflanze einen Entwicklungsvorsprung, der bis zur Ernte erhalten bleibt. Es sei erwähnt, daß Pflanzen aller Art mit dem Bioregulator behandelt werden können, d.h. beispielsweise auch Blumen.

Die ebenfalls mögliche Blattbehandlung führt unter anderem zu einem höheren Chlorophyllgehalt und damit zu einer besseren Ausnutzung der Lichtenergie. Daraus folgt ein günstiger Einfluß auf wichtige, weil qualitätsbestimmende, Pflanzeninhaltsstoffe (Eiweiße, Öle, Zucker, Vitamine).

Die Vorteile bei der Behandlung bei Pflanzen aller Art mit dem erfindungsgemäßen Bioregulator liegen insbesondere in einer Förderung der Keimkraft, in einer Förderung der Ausbildung des Wurzelystems, in einer verbesserten Wasserund Nährstoffaufnahme, in einem höheren Chorophyllgehalt der Blätter, verbunden mit einer besseren Ausnutzung der Sonnenenergie, in einer größeren Widerstandskraft gegen Parasiten und Krankheiten, in einer geringeren Empfindlichkeiten gegen Klimaeinflüsse, in einer Beschleunigung des Reifeprozesses bzw. in einer früheren Ernte und in einer allgemeinen Ertragssteigerung. Damit einher geht eine Qualitätssteigerung, beispielsweise durch einen höheren Öl- und Eiweißgehalt, durch einen höheren Vitamin- und Zuckergehalt, durch höheren Trockenmassegehalt, gegebenenfalls auch durch eine gleichmäßigere Ausfärbung und Größe der Früchte. Der Bioregulator ist außerdem sehr gut und gefahrlos lagerfähig. Bei seinem Einsatz kann ganz auf die üblichen Düngemittel verzichtet werden bzw. deren einzusetzende Menge wird fühlbar reduziert. Bei geringem Ertragsniveau ergibt sich eine wesentliche Ertragssteigerung. Der Einsatz erfolgt praktisch ohne zusätzlichen Arbeitsaufwand.

Der erfindungsgemäße Bioregulator wird, je nach Kultur, zur Saatgut- und/oder Blattbehandlung verwendet. Die Aufwandmenge und der Anwendungszeitpunkt ist pflanzenspezifisch. Im allgemeinen wird die Behandlung als Spritzung durchgeführt, wobei der Bioregulator in einer entsprechenden Menge warmen Wassers aufgelöst, verrührt und auf die erforderliche Wassermenge verdünnt wird. Zur Saatgutbehandlung kann der Bioregulator auch als Pulver auf das Saatgut aufgebracht werden. Die Anwendung erfordert keine besonderen Vorsichts- bzw. Schutzmaßnahmen. Der Bioregulator ist unschädlich für Mensch, Tier und Umwelt. Gegebenenfalls kann er auch mit Pflanzenschutzmitteln gemischt und angewendet werden, die hierbei aber in fühlbar verringerter Menge notwendig werden.

Wie bereits betont wurde, hat die Erfindung als Ziel die Anwendung natürlicher Bioregulatoren zwecks Stimulierung des Wachstums und der Entwicklung der Pflanzen, zum Zweck der Erhöhung des Ertrages und der Verbesserung der Qualität landwirtschaftlicher Erzeugnisse. Die sekundären positiven Effekte der Wirkung der Bioregulatoren, die sich in der Erhöhung der Qualität des Bodens zeigen, sind aber auch beachtlich, weil sich ihr Gehalt an leicht zugänglichen Formen von Nahrstoffen erhöht, so daß auf diese Weise die aufzuwendende Menge an Mineraldünger verringert wird. Dabei wird auch der Ertrag und die Aufnahme des Mineraldüngers durch die Pflanzen verbessert.

Ein wesentlicher sekundärer Effekt ist die Verminderung der nötigen Mengen von Schutzmitteln pro Flacheneinheit. Durch die Wirkung des natürlichen Bioregulators auf die Pflanzen werden nämlich einerseits die immunologischen Eigenschaften der Pflanzen verbessert und andererseits können die Pflanzen die Streßperioden, die durch Anwendung der Schutzmittel entstehen, besser ertragen.

Der aus pflanzlichen Rohstoffen ausgesonderte natürliche Bioregulator enthält natürliche physiologisch aktive Gruppen von Verbindungen (Fitohormone, Mediatoren und Inhibitoren). Diese Verbindungen liegen im Bioregulator in natürlichen, relativ optimalen gegenseitigen Verhältnissen vor, die die Relation: Bioregulator - Organismus - Umgebung berücksichtigen.

Die Grundstoffe zur Ausführung des Verfahrens dieser Anmeldung sind Pflanzen, die zur Familie Caryophillaceae gehören, und zwar: Herniaria L, Duffonia L, Spergula L, Ortega L, Arenaria L, und Holosteum L. Das Verfahren wird chargenweise ausgeführt. Die pflanzlichen Rohstoffe werden in genau bestimmten Gewichtsverhältnissen in entsprechenden Mühlen gemahlen, bis die Granulation der Körner D = 1 - 3 x $10^{-5}$ cm wird. Gegebenenfalls kann man auch den einen oder anderen der Hauptbestandteile fortlassen, wodurch aber die Wirksamkeit des Bioregulators entsprechend verringert wird.

Für die Chargenausführung des Verfahrens werden die Ausgangsstoffe, in Gew.-% auf 100 % der ausgewählten Gewichtseinheit pro Charge, in den folgenden Verhältnissen genommen:

| Herniaria L | 24,3 % |
|---|---|
| Duffonia L | 10,6 % |
| Spergula L | 12,8 % |

3

| | |
|---|---|
| Ortega L | 34,7 % |
| Arenaria L | 5,6 % |
| Sagina L | 6,5 % |
| Holosteum L | 4,3 % |
| anderes | 1,2 % |
| | 100 % |

Die benutzten Pflanzen werden einzeln gemahlen. Das Verfahren wird in einem Mischer-Reaktor fortgesetzt. Die abgemessenen Mengen werden unter kontinuierlichem Mischen mit der Hand oder automatisch einzeln hineingegeben, mit der entsprechenden Wirkung des polaren Extraktionsmittels - n-Butanol. Eine Drehzahl des Mischer-Reaktors in einem Interval von 400 - 500 U/Minute, bei der Temperatur von 20 bis 40°C reicht aus. Das Mischen dauert etwa sechzig Minuten. Die Konsistenz der gemischten Masse darf nicht breiig oder staubig, sondern muß plastisch sein. Nach dem Mischen und nach der Extraktion wird bei einer Temperatur von etwa 50°C bis zu einer konstanten Feuchtigkeit getrocknet und nach dem beendeten Trocknen wird die Masse degranuliert.

Nach der Degranulation wird der pulverförmige Bioregulator dosiert und mit entsprechenden Maschinen verpackt, wobei eine breite Möglichkeit zum volumetrischen oder gravimetrischen Dosieren besteht.

Es gibt zwei Grundformen der von der Bestimmung des Bioregulators abhängigen Ausführung des Verfahrens. Bei der ersten Ausführungsform wird auf 100 kg des zerkleinerten Biomaterials, das aus den Pflanzen in vorgenannten Gewichtsverhältnissen zusammengesetzt ist, mit den Körnern von d = $3 \times 10^{-5}$ cm Größe, in dem Reaktor-Mischer allmählich mit n-Butanol eine Stunde lang eingewirkt, bis die Masse eine plastische Konsistenz hat. Das Verfahren wird bei einer Temperatur von +20°C ausgeführt, wobei die Drehzahl des Mischers 400 U/Minute beträgt.

Nach der Extraktion wird bei einer Temperatur T = 50°C bis zur konstanten Feuchtigkeit getrocknet und danach wird die Degranulation durchgeführt.

Der gewonnene Bioregulator kann für die Behandlung der Samen landwirtschaftlicher Kulturen im Trocken- oder Naßverfahren bei der Nachbearbeitung des Samens eingesetzt werden, sowie für den Einbau in ein Schutzmittel oder in den Produktionsprozeß der Mineraldüngern und Schutzmitteln.

Bei dem zweiten Ausführungsbeispiel wird dieselbe Grundstoffmenge der vorgenannten Pflanzen genommen, aber mit der Körnergröße von D = $1 \times 10^{-5}$ cm. In dem Mischer wird die vorher quantitativ abgemessene Menge eine Stunde lang allmählich mit n-Butanol bei der Temperatur von 40°C bis zur plastischen Konsistenz behandelt. Die Drehzahl des Mischers beträgt 500 U/Minute.

Nach der beendeten Extraktion wird die Masse bei einer Temperatur von 50°C getrocknet und danach degranuliert.

Der so gewonnene Bioregulator ist für eine Blattbehandlung von gezüchteten jungen Pflanzen sowie für die Behandlung des Bodens vor der Saat oder vor dem Pflanzen, usw. bestimmt.

Das fertige Material wird nach der Granulation in Mengen von z.B. 200, 1000 und 2000 g verpackt, abhängig davon, was der Endabnehmer braucht, wobei man die Tatsache beachten muß, daß die an landwirtschaftlichen Kulturen angewandte Basis bei 200 g pro Hektar liegt.

Da der gewonnene Bioregulator nicht hygroskopisch ist, muß die Verpackung keine spezifischen Charakteristiken haben. Das Aufschüttengewicht des Bioregulars ist 1,52 1/kg. Das verpackte Produkt wird in verschlossenen Räumen bei den für solche Produkte normalen Lagerbedingungen aufbewahrt. Bei den vorgenannten Verpackungs- und Aufbewahrungsbedingungen ist das Produkt etwa fünf Jahre lang haltbar.

Der Bioregulator kann folgenderweise benutzt werden:

a. durch Spritzen des Bodens vor Aussaat oder dem Pflanzen, und zwar in einer Wasserlösung;

b. durch Behandlung des Samer's mit dem Bioregulator in Fabriken für die Nachbearbeitung des Samens in einem trockenen oder nassen Verfahren der Nachbearbeitung des Samens mit Schutzmitteln;

c. durch eine Blattbehandlung der jungen Pflanzen der gezüchteten Spezies mit der Wasserlösung des Bioregulators; und

d. durch die Anwendung mineralischer Dünger und/oder Schutzmittel in die im Laufe ihres Herstellungsprozesses die nötigen Mengen des Bioregulators eingetragen wurden.

Die Spritzbehandlugn des Bodens mit dem Bioregulator wird mit seiner Wasserlösung durchgeführt, wobei die Lösung mit Wasser verdünnt wird. Dies ist abhängig vom Typ der Spritze, die für das Spritzen eines Hektars des Grundes (100 - 150 1) nötig ist. Danach wird es auf den vorbereiteten Grund, vor der Aussaat oder dem Pflanzen, Mengen von flüssigen Düngern, verwendet.

4

EP 0 283 744 B1

Zur Ernährung des Bodens ist es auf den kleineren Parzellen möglich, den Bioregulator etwa (200 g/ha) mit Sand zu mischen und den Boden mit der Hand zu behandeln.

Die Behandlung des Samens durch Bioregulatoren in Fabriken für die Nachbearbeitung des Samens ist auf zwei Weisen möglich: in der Phase des trockenen Verfahrens der Verstäubung mit Schutzmitteln und beim nassen Verfahren der Behandlung des Samens mit Schutzmitteln.

Beim trockenen Verfahren wird der pulverige Bioregulator zuerst homogenisiert mit einer (um 10 - 15%) verminderten Menge des Schutzmittels, die für die Verstäubung der Menge des Samens pro Hektar nötig ist. Danach wird diese Mischung des Bioregulators und des Schutzmittels weiter bei der trockenen Verstäubung des Samens benutzt.

Beim Naßverfahren wird zuerste eine Menge des Bioregulators (200 g/ha) im Wasser (1 - 2 l) unter intensivem Rühren gelöst und dann mit einer (um 10 - 15 %) verminderten Menge der Schutzmittellösung, die für die Behandlung der Samenmenge pro ha nötig ist, vermischt. Weiter wird das Naßverfahren der Nachbearbeitung des Samens mit vermischten Lösungen des Bioregulators und des Schutzmittels normal fortgesetzt.

Wenn es um die Anwendung des Bioregulators an kleineren Parzellen geht, wird die Behandlung des schon nachgearbeiteten Samens mit Schutzmitteln im trockenen Verfahren in einer Verstäubungstrommel durchgeführt. Es kann auch mit Hand gearbeitet werden, und zwar mit einer Menge des Samens, die für einen Hektar nötig ist. Solche Anwengung des Bioregulators ist für den Samen mit kleinerem absoluten Gewicht von 1000 Körnern (Gemüse) charakteristisch, oder dort, wo weniger Samen pro 1 ha genommen wird (manche Ackerbaukulturen - Mais, Zuckerrübe, Sonnenblume und ähnl.).

Ausgenommen von der Anwendung des Bioregulators durch den Samen an kleineren Parzellen ist Kartoffel, wo keine Zerstäubung durchgeführt, sondern eine Lösung des Bioregualtors für eine Blattbehandlung der Kartoffel angesetzt wird.

Die Blattbehandlung der jungen Pflanzen gezüchteter Spezies ist möglich durch gesonderte Anwendung (200 g/ha) oder zusammen mit dem Spritzen verminderter Schutzmittelmengen (um 10 - 15 %) und/oder verminderter Mineraldüngermengen (um 20 - 30 %), bei der Ernährung in der 3 - 7-Blätterphase, bzw. spätestens bis zum Ende der Blütezeit.

Durch die Anwendung mineralischer Dünger und/oder von Schutzmitteln, in die während des Produktionsprozesses die Bioregulatoren eingebaut wurden, werden bedeutende Effekte erreicht. Es ergibt sich eine Vereinbarkeit und synergistische Wirkung mineralischer Dünger und/oder Schutzmittel einerseits und der Bioregulatoren andererseits.

Die in den Mineraldünger oder das Schutzmittel eingebaute Menge der Bioregulatoren (200 g/ha), die entsprechend der Qualtität des Bodens und dem Gesundheitszustand der Saat nötig ist, vermindert ihre Mengen um 20 - 30 % bei mineralischen Düngern, bzw. um 10 - 15 % bei Schutzmitteln. Hierbei erübrigt sich also eine gesonderte Anwendung des Bioregulators.

Die Anzahl der Anwendungen und der Menge an Bioregulatoren hängt hauptsächlich von der betreffenden Pflanzensorte ab. Üblicherweise wendet man den Bioregulator 1 - 3 mal an bei Mengen von etwa 200 - 600 g/ha.

**Patentansprüche**

1.  Bioregulator auf der Basis pflanzlicher Rohstoffe, von Pflanzen welche zur Familie der Caryophillaceae gehören
    **gekennzeichnet durch**
    folgende Hauptbestandteile, ggf. mit üblichen Zusätzen, beispielsweise mineralischen Düngemitteln und/oder Pflanzenschutzmitteln,
    a.) 20 bis 30 Gew. % Herniaria L.
    b.) 8 bis 14 Gew. % Duffonia L.
    c.) 10 bis 16 Gew. % Spergula L.
    d.) 30 bis 40 Gew. & Ortega L.
    e.) 5 bis 7 Gew. % Arenaria L.
    f.) 6 bis 8 Gew. % Sagina L.
    g.) 4 bis 6 Gew. % Holesteum L. und
    h.) 0 bis 10 Gew. % andere pflanzliche Bestandteile.

2.  Bioregulator nach Anspruch 1,
    **dadurch gekennzeichnet**,
    daß die Hauptbestandteile in etwa folgenden Anteilen vorliegen:

5

a.) 24,3 Gew. % Herniaria L.
b.) 10,6 Gew. % Duffonia L.
c.) 12,8 Gew. % Spergula L.
d.) 34,7 Gew. % Ortega L.
e.) 5,6 Gew. % Arenaria L.
f.) 6,5 Gew. & Sagina L.
g.) 4,3 Gew. % Holesteum L. und
h.) 1,2 Gew. % andere pflanzliche Bestandteile.

3. Verfahren zur Herstellung eines Bioregulators, dadurch gekennzeichnet, daß die in Anspruch 1 oder 2 angegebenen Hauptbestandteile in den dort angegebenen Gewichtsprozenten einzeln in einer Mühle bis zu Korngrößen mit einem Durchmesser von etwa 0,5 bis 100 $\mu$m, vorzugsweise etwa 1 bis 3 $\mu$m, gemahlen und anschließend miteinander gemischt werden, und daß die Mischung anschließend durch Zugabe eines geeigneten Extraktionsmittels, vorzugsweise von n-Butanol, in eine Masse mit plastischer Konsistenz umgewandelt wird, die anschließend getrocknet wird.

4. Verfahren nach Anspruch 3,
**dadurch gekennzeichnet**,
daß das Extraktionsmittel nach und nach über einen Zeitraum von etwa 60 Minuten bei einer Temperatur von etwa 20°C bis 40°C der Mischung unter ständigem Rühren bei einer Drehzahl von etwa 400 bis 500 Umdrehungen pro Minute zugegeben wird, worauf die Masse mit plastischer Konsistenz bei einer Temperatur von etwa 50°C bis zu einer konstanten Feuchtigkeit getrocknet, gegebenenfalls granuliert und dann abgepackt wird.

**Claims**

1. Bioregulator based on plant raw materials which comprises the following main components belonging to the family Caryophillaceae, also if necessary with usual additives, for instance mineralic fertilizers and/or plant protective agents:
   (a) 20 to 30 weight % Herniaria,
   (b) 8 to 14 weight % Buffonia,
   (c) 10 to 16 weight % Spergula,
   (d) 30 to 40 weight % Ortega,
   (e) 5 to 7 weight % Arenaria,
   (f) 6 to 8 weight % Sagina,
   (g) 4 to 6 weight % Holesteum, and
   (h) 0 to 10 weight % other plant based additives.

2. Bioregulator according to claim 1, wherein said main components are present in the following proportions:
   (a) 24.3 weight % Herniaria,
   (b) 10.6 weight % Buffonia,
   (c) 12.8 weight % Spergula,
   (d) 34.7 weight % Ortega,
   (e) 5.6 weight % Arenaria,
   (f) 6.5 weight % Sagina,
   (g) 4.3 weight % Holesteum, and
   (h) 1.2 weight % other plant based additives.

3. A method for producing a bioregulator, characterized by grinding the main components according to claim 1 or 22 in the weight percentages given in those claims in a mill to granules having an average diameter of 0.5 to 100 $\mu$m, preferably to 1 to 3 $\mu$m, admixing the ground components, adding an extracting substance comprising n-butanol to convert the admixture into a mass having a plastic consistency, and then drying the mass.

4. A method according to claim 3, wherein the extracting substance is gradually added to the mixture over a period of about 60 minutes and at a temperature of the mixture of between about 20°C and about 40°C, the mixture being constantly stirred at about 400 to 500 revolutions per minute while the extracting substance is being added, after which the mass with plastic consistency is dried at a temperature of about 50°C until a constant level of moisture is reached and thereafter possibly degranulation is carried out followed by packing of the degranulated mass.

## Revendications

1. Biorégulateur à base de matières premières végétales constituées de plantes appartenant à la famille dos Caryophillaceae, caractérisé par les composants principaux suivants, éventuellement avec des produits d'addition usuels, par exemple des agents fertilisants minéraux et/ou des agents phytosanitaires,
   a) 20 à 30 % en poids de Herniaria L.
   b) 8 à 14 % en poids de Duffonia L.
   c) 10 à 16 % en poids de Spergula L.
   d) 30 à 40 % en poids d'Ortega L.
   e) 5 à 7 % en poids d'Arenaria L.
   f) 6 à 8 % en poids de Sagina L.
   g) 4 à 6 % en poids de Holesteum L. et
   h) 0 à 10 % en poids d'autres composants végétaux.

2. Biorégulateur selon la revendication 1, caractérisé en ce que les composants principaux sont présents dans les concentrations suivantes approximatives:
   a) 24,3 % en poids de Herniaria L.
   b) 10,6 % en poids de Duffonia L.
   c) 12,8 % en poids de Spergula L.
   d) 34,7 % en poids d'Ortega L.
   e) 5,6 % en poids d'Arenaria L.
   f) 6,5 % en poids de Sagina L.
   g) 4,3 % en poids de Holesteum L. et
   h) 1,2 % en poids d'autres composants végétaux.

3. Procédé de préparation d'un biorégulateur, caractérisé en ce que les composants principaux indiqués dans la revendication 1 ou 2, dans les pourcentages en poids qui y sont mentionnés, sont broyés individuellement dans un moulin jusqu'à une granulométrie correspondant à un diamètre d'environ 0,5 à 100 micromètres, de préférence, environ 1 à 3 micromètres, et mélangés ensuite les uns aux autres, et en ce que le mélange obtenu est ensuite transformé, par addition d'un agent d'extraction approprié, de préférence du n-butanol, en une masse à consistance plastique, qui est alors séchée.

4. Procédé selon la revendication 3, caractérisé en ce que l'agent d'extraction est ajouté au mélange progressivement sur un intervalle d'environ 60 minutes à une température d'environ 20 à 40°C sous agitation permanente à raison d'environ 400 à 500 rotations par minute, après quoi la masse à consistance plastique est séchée jusqu'à humidité constante à une température d'environ 50°C, éventuellement granulée et ensuite emballée.